# EUROPEAN PATENT SPECIFICATION

(11) **EP 2 053 211 B1**
(45) Date of publication and mention of the grant of the patent: **23.12.2009**
(21) Application number: 08018708.1
(22) Date of filing: 24.10.2008
(51) Int. Cl.: F01N 3/08, F01N 11/00, F01N 3/20

(54) **Exhaust gas control apparatus for internal combustion engine**
Abgassteuerungsvorrichtung für Brennkraftmaschine
Dispositif de contrôle de gas d'échappement pour moteur à combustion interne

(30) Priority: 25.10.2007 JP 2007277724
(43) Date of publication of application: 29.04.2009
(73) Proprietor: Toyota Jidosha Kabushiki Kaisha, Toyota-shi, Aichi-ken 471-8571 (JP)
(72) Inventor: Yoshida, Kohei, Toyota-shi Aichi-ken, 471-8571 (JP); Asanuma, Takamitsu, Toyota-shi Aichi-ken, 471-8571 (JP); Nishioka, Hiromasa, Toyota-shi Aichi-ken, 471-8571 (JP); Otsuki, Hiroshi, Toyota-shi Aichi-ken, 471-8571 (JP); Nakata, Yuka, Toyota-shi Aichi-ken, 471-8571 (JP)
(74) Representative: Kuhnen & Wacker

(56) References cited:
- US-A1- 2007 056 268

## Description

### BACKGROUND OF THE INVENTION

### 1. Field of the Invention

The invention relates to an exhaust gas control apparatus for an internal combustion engine.

### 2. Description of the Related Art

Japanese Patent Application Publication No. 2006-512529 (JP-A-2006-512529) describes an internal combustion engine which has a NOₓ storage catalyst provided in an engine exhaust passage and a NOₓ selective reduction catalyst provided downstream of the NOₓ storage catalyst in the engine exhaust passage. The NOₓ storage catalyst stores NOₓ in the exhaust gas when the air-fuel ratio of the inflowing exhaust gas is lean, and releases the stored NO_{X} when the air-fuel ratio of the inflowing exhaust gas becomes equal to the stoichiometric air-fuel ratio or rich. The NOₓ selective reduction catalyst is able to selectively reduce NOₓ in the exhaust gas using ammonia when the air-fuel ratio of the exhaust gas is lean. When stored NOₓ needs to be released from the NOₓ storage catalyst, the internal combustion engine makes the air-fuel ratio of the exhaust gas flowing into the NOₓ storage catalyst rich.

In this internal combustion engine, a large portion of NOₓ produced during combustion with a lean air-fuel ratio is stored in the NOₓ storage catalyst. The NO_{X} that is not stored in the NOₓ storage catalyst flows into the NOₓ selective reduction catalyst located downstream. In this internal combustion engine, however, the NOₓ released from the NOₓ storage catalyst when the air-fuel ratio of the exhaust gas flowing into the NOₓ storage catalyst is rich reacts with large amounts of HC in the exhaust gas, producing ammonia NH₃ which is adsorbed on the NOₓ selective reduction catalyst. Accordingly, when combustion is performed with a lean air-fuel ratio, the NOₓ that passes through the NOₓ storage catalyst is reduced by this adsorbed ammonia in the NOₓ selective reduction catalyst such that NOₓ is able to be successfully purified.

Exhaust gas also contains SOₓ which also gets stored in the NOₓ storage catalyst. As the amount of SOₓ stored in the NOₓ storage catalyst increases, less NOₓ is able to be stored so when a NOₓ storage catalyst is used, SOₓ needs to occasionally be released from the NOₓ storage catalyst. In this case, SOₓ can be released from the NOₓ storage catalyst by making the air-fuel ratio of the exhaust gas flowing into the NO_{X} storage catalyst is rich when the temperature of the NOₓ storage catalyst is increased to 600°C or more.

When SOₓ is released from the NOₓ storage catalyst, it reacts with the adsorbed ammonia in the NOₓ selective reduction catalyst, producing hydrogen sulfide. In this case, however, not much SOₓ is released from the NOₓ storage catalyst so not much hydrogen sulfide is produced.

SOₓ in the exhaust gas substantially reduces the durability and performance of post-processing apparatuses such as exhaust gas control catalysts so it is necessary to remove it from the exhaust gas. To do this, it is preferable to provide a SOₓ trap catalyst capable of trapping the SOₓ in the exhaust gas. However, even when such a SOₓ trap catalyst is used, the SOₓ must be released from the SOₓ trap catalyst before the SOₓ trap catalyst becomes saturated with SOₓ. However, unlike the NO. storage catalyst, the SOₓ trap catalyst is designed to trap SOₓ so large amounts of SOₓ are trapped in the SOₓ trap catalyst.

Therefore, when SOₓ is released from the SOₓ trap catalyst, it is released in large amounts. Accordingly, when a SOₓ trap catalyst is used, large amounts of hydrogen sulfide are produced in the NOₓ selective reduction catalyst. In this case, when high concentrations of hydrogen sulfide are discharged into the atmosphere, a very irritating odor is produced. Thus there is a need to keep the concentration of hydrogen sulfide that is discharged down to an allowable concentration at which the irritating odor is almost unnoticeable.

### SUMMARY OF THE INVENTION

Therefore one aspect of this invention relates to an exhaust gas control apparatus for an internal combustion engine, which includes a NOₓ selective reduction catalyst which is arranged in an engine exhaust passage and selectively reduces NOₓ in exhaust gas using ammonia when an air-fuel ratio of the exhaust gas is lean, a SOₓ trap catalyst which is arranged in the engine exhaust passage upstream of the NOₓ selective reduction catalyst and traps SOₓ in the exhaust gas, and a control apparatus that controls the state of the exhaust gas. The control apparatus i) reduces an adsorbed ammonia amount adsorbed on the NOₓ selective reduction catalyst before SOₓ is released or ii) reduces the amount of SOₓ released from the SOₓ trap catalyst when SOₓ is released, such that a discharge concentration of hydrogen sulfide will be less than a preset maximum concentration when SOₓ is released.

This aspect makes it possible to make the irritating odor from hydrogen sulfide almost unnoticeable.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG 1 is an overall view of a compression ignition internal combustion engine;
FIG. 2 is a sectional view of a surface portion of a substrate of a SOₓ trap catalyst;
FIG. 3A is a graph showing the release rate of SOₓ from the SOₓ trap catalyst and the like;
FIG. 3B is a graph showing the release rate of SOₓ from the SOₓ trap catalyst;
FIG 4A is a graph showing an adsorbed ammonia amount and the like;
FIG 4B is a chart showing the relationship between the adsorbed ammonia amount and the supply timing of aqueous urea;
FIG. 4C is a map for calculating the amount of NOₓ discharged per unit of time from the engine;
FIG. 5 is a flowchart of a routine used to control the supply of aqueous urea;
FIG. 6 is a flowchart of a routine for releasing SOₓ;
FIG 7 is a graph showing the discharge concentration and the allowable concentration of hydrogen sulfide H₂S;
FIG 8 is a flowchart of a routine for executing a second example embodiment of SOₓ release control;
FIG 9 is a flowchart of a routine for executing a third example embodiment of SOₓ release control;
FIG. 10A is a chart illustrating control to increase the amount of NOₓ discharged from the engine;
FIG 10B is a map for calculating the amount of NOₓ amount discharged per unit of time from the engine;
FIG. 11 is a flowchart of a routine for executing a fourth example embodiment of SOₓ release control;
FIGS. 12A and 12B are graphs showing the desorption rate of adsorbed ammonia;
FIG. 13 is a graph showing the allowable concentration of the discharge concentration of hydrogen sulfide H₂S;
FIG. 14 is a flowchart of a routine for executing a fifth example embodiment of SOₓ release control;
FIG. 15 is a graph showing the allowable concentration of the discharge concentration of hydrogen sulfide H₂S; and
FIG. 16 is a flowchart of a routine for executing sixth example embodiment of SOₓ release control.

### DETAILED DESCRIPTION OF THE EMBODIMENTS

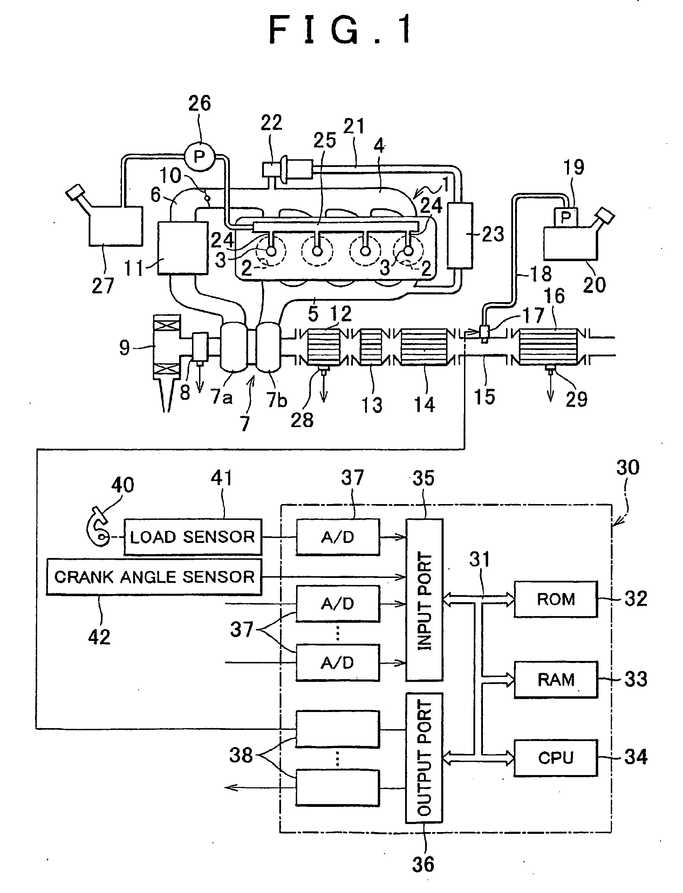

FIG. 1 is an overall view of a compression ignition internal combustion engine. This internal combustion engine includes the engine 1 itself, a combustion chamber 2 in each cylinder, electronically controlled fuel injection valves 3 for injecting fuel into the combustion chambers 2, an intake manifold 4, and an exhaust manifold 5. The intake manifold 4 is connected to an outlet port of a compressor 7a of an exhaust turbocharger 7 via an intake duct 6, and an inlet port of the compressor 7a is connected to an air cleaner 9 via an intake air amount detector 8. A throttle valve 10 which is driven by a step motor is arranged inside the intake duct 6. Further, a cooling apparatus 11 for cooling the intake air that flows through the intake duct 6 is arranged around the intake duct 6. In the first example embodiment shown in FIG. 1, the intake air is cooled by engine coolant that is introduced into the cooling apparatus 11.

Meanwhile, the exhaust manifold 5 is connected to an inlet port of an exhaust turbine 7b of the exhaust turbocharger 7. An outlet port of the exhaust turbine 7b is connected to an inlet port of a SOₓ trap catalyst 12, and an outlet port of the SOₓ trap catalyst 12 is connected to an inlet port of an oxidation catalyst 13. Further, an outlet port of the oxidation catalyst 13 is connected to an inlet port of a particulate filter 14, and an outlet port of the particulate filter 14 is connected via an exhaust pipe 15 to a NOₓ selective reduction catalyst 16 which is capable of selectively reducing NOₓ in the exhaust gas using ammonia when the exhaust gas air-fuel ratio is lean. This NOₓ selective reduction catalyst 16 is made from Fe zeolite, for example.

An aqueous urea supply valve 17 is arranged in the exhaust pipe 15 upstream of the NOₓ selective reduction catalyst 16. This aqueous urea supply valve 17 is connected via a supply pipe 18 and a supply pump 19 to an aqueous urea tank 20. When aqueous urea is to be supplied, aqueous urea stored in the aqueous urea tank 20 is injected by the supply pump 19 from the aqueous urea supply valve 17 into the exhaust gas flowing through the exhaust pipe 15. At this time, the NOₓ in the exhaust gas is reduced in the NOₓ selective reduction catalyst 16 by ammonia ((NH₂)2CO + H₂O → 2NH₃ + CO₂) produced by the urea.

The exhaust manifold 5 and the intake manifold 4 are connected together via an exhaust gas recirculation (hereinafter simply referred to as "EGR") passage 21 in which an electronically controlled EGR control valve 22 is arranged. Also, a cooling apparatus 23 for cooling EGR gas flowing through the EGR passage 21 is arranged around the EGR passage 21. In the first example embodiment shown in FIG. 1, the EGR gas is cooled by engine coolant that is introduced into the cooling apparatus 23. Meanwhile, the fuel injection valves 3 are connected to a common rail 25 via fuel supply pipes 24. This common rail 25 is connected to a fuel tank 27 via an electronically controlled variable discharge fuel pump 26 which supplies fuel stored in the fuel tank 27 to the common rail 25. The fuel in the common rail 25 is then supplied to the fuel injection valves 3 via the fuel supply pipes 24.

An electronic control unit (ECU) 30 is formed of a digital computer and includes ROM (read only memory) 32, RAM (random access memory) 33, a CPU (a microprocessor) 34, an input port 35, and an output port 36, all of which are connected together via a bidirectional bus 31. A temperature sensor 28 for detecting the bed temperature of the SOₓ trap catalyst 12 is mounted to the SOₓ trap catalyst 12, and a temperature sensor 29 for detecting the bed temperature of the NOₓ selective reduction catalyst 16 is mounted to the NOₓ selective reduction catalyst 16. Output signals from these temperature sensors 28 and 29 and the intake air amount detector 8 are input to the input port 35 via corresponding AD converters 37. Also, a load sensor 41 that generates an output voltage proportional to a depression amount L of an accelerator pedal 40 is connected to the accelerator pedal 40, and the output voltage of this load sensor 41 is input to the input port 35 via a corresponding AD converter 37. Further, a crank angle sensor 42 that generates an output pulse every time a crankshaft rotates 15°, for example, is connected to the input port 35. Meanwhile, the output port 36 is connected to the fuel injection valves 3, the step motor for driving the throttle valve 10, the aqueous urea supply valve 17, the supply pump 19, the EGR control valve 22, and the fuel pump 26 via corresponding drive circuits 38. The ECU 30 controls, for example, the exhaust gas temperature or the exhaust gas air-fuel ratio via the fuel injection valves 3, the aqueous urea supply valve 17 and the like.

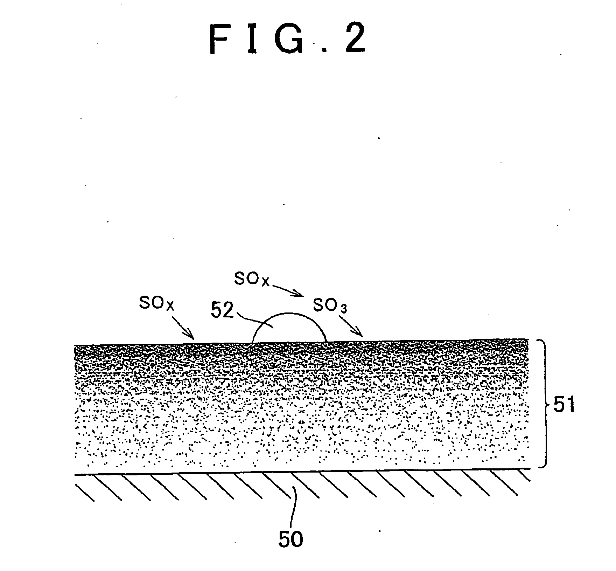

First the SOₓ trap catalyst 12 will be described. This SOₓ trap catalyst 12 is a monolith catalyst having, for example, a honeycomb structure with multiple exhaust gas holes extending in straight lines in the axial direction of the SOₓ trap catalyst 12. FIG. 2 illustrates a cross-section of a surface portion of a substrate 50 of the SO_{X} trap catalyst 12. As shown in the drawing, a coat layer 51 is formed on the surface of the substrate 50, and a precious metal catalyst 52 is carried dispersed on the surface of this coat layer 51.

In the first example embodiment shown in FIG. 2, platinum Pt is used as the precious metal catalyst 52. The component forming the coat layer 51 may be at least one selected from the group consisting of an alkali metal, an alkali earth, and a rare earth. The alkali metal is, for example, kalium K, natrium Na, or cesium Cs. The alkali earth is, for example, barium Ba or calcium Ca; The rare earth is, for example, lanthanum La or yttrium Y. That is, the coat layer 51 of the SOₓ trap catalyst 12 is strongly basic.

The SOₓ in the exhaust gas, i.e.; SO₂, oxidizes on the platinum Pt, as shown in FIG 2, and then becomes trapped in the coat layer 51. That is, the SO₂ diffuses in the coat layer 51 in the form of sulfate ions SO₄²⁻, thus forming hydrosulfate. Incidentally, as described above, the coat layer 51 is strongly basic so some of the SO₂ in the exhaust gas becomes trapped directly in the coat layer 51, as shown in FIG 2.

The shading in the coat layer 51 in FIG. 2 indicates the concentration of trapped SOₓ. As shown in FIG 2, the SOₓ concentration in the coat layer 51 is highest in the area near the surface of the coat layer 51 and becomes gradually lower deeper down. When the SOₓ concentration near the surface of the coat layer 51 becomes high, the surface of the coat layer 51 becomes less basic and its ability to trap SOₓ diminishes. However, even if its ability to trap SOₓ diminishes in this way, the SOₓ trapping ability is restored when the temperature of the SOₓ trap catalyst 12 rises when combustion is performed with a lean air-fuel ratio.

That is, when the temperature of the SOₓ trap catalyst rises, the SOₓ that is concentrated near the surface of the coat layer 51 diffuses inward in the coat layer 51 so that the SOₓ concentration in the coat layer 51 evens out. That is, the hydrosulfate produced in the coat layer 51 changes from an unstable state in which it is concentrated near the surface of the coat layer 51 to a stable state in which it is evenly dispersed throughout the entire coat layer 51. When the SOₓ near the surface of the coat layer 51 diffuses inward in the coat layer 51, the SOₓ concentration near the surface of the coat layer 51 drops so the SO_{X} trapping ability is restored.

In this way, the SOₓ trap catalyst 12 continues to trap SOₓ while repeating this process to restore the SOₓ trapping ability. However, as the SOₓ trap catalyst 12 becomes saturated with SOₓ (i.e., as the SOₓ trap catalyst 12 nears the point where it is no longer able to trap any more SOₓ), the ability of the SOₓ trap catalyst 12 to trap SOₓ no longer able to be restored. At this time, the temperature of the SOₓ trap catalyst 12 is raised to 600°C or more and the air-fuel ratio of the exhaust gas flowing into the SOₓ trap catalyst 12 is made rich. As a result, trapped SOₓ is released from the SOₓ trap catalyst 12, thereby restoring the ability of the SOₓ trap catalyst 12 to trap SOₓ.

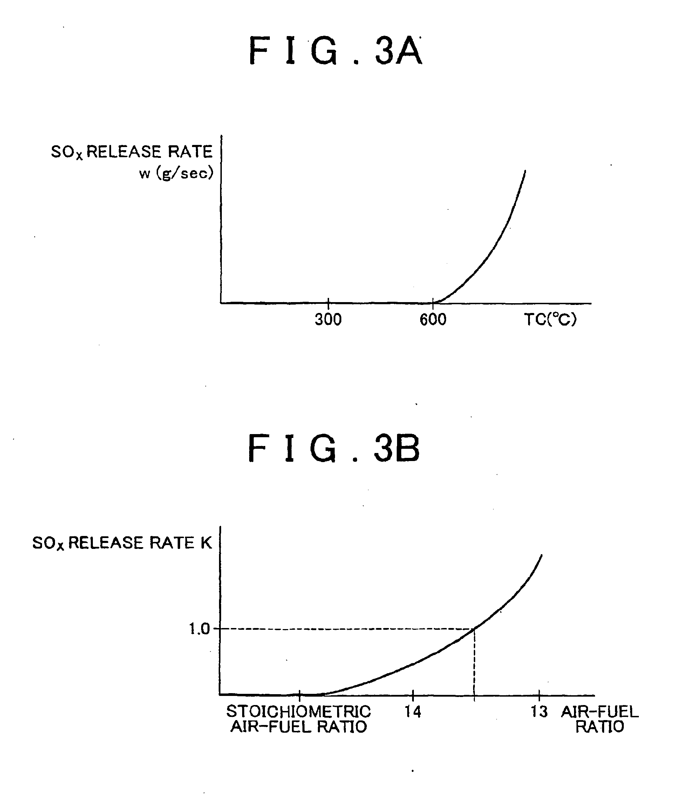

FIG. 3A is a graph showing the relationship between i) the amount of SOₓ released per unit of time from the SOₓ trap catalyst 12, i.e., the SOₓ release rate W (g / sec), when the air-fuel ratio of the exhaust gas is a reference rich air-fuel ratio such as ' 13.5 and ii) the bed temperature TC of the SOₓ trap catalyst 12. FIG 3B is a graph showing the relationship between the SOₓ release rate K from the SOₓ trap catalyst 12 and the air-fuel ratio of the exhaust gas. The amount (g / sec) of SOₓ that is released per unit of time from the SOₓ trap catalyst 12 is expressed by the product of the SOₓ release rate W and the SOₓ release rate K.

Therefore, the amount (g / sec) of SOₓ that is released per unit of time from the SOₓ trap catalyst 12 rapidly increases when the catalyst bed temperature TC reaches 600°C or higher, as shown in FIG. 3A, and also increases when the air-fuel ratio of exhaust gas is reduced, i.e., when the degree of richness of the exhaust gas air-fuel ratio increases, as shown in FIG 3B. Incidentally, the temperature of the SOₓ trap catalyst 12 is increased by, for example, retarding the fuel injection timing or injecting supplemental fuel during the exhaust stroke. Also, the air-fuel ratio of the exhaust gas that flows into the SOₓ trap catalyst 12 is made rich by supplying additional fuel during the exhaust stroke, for example.

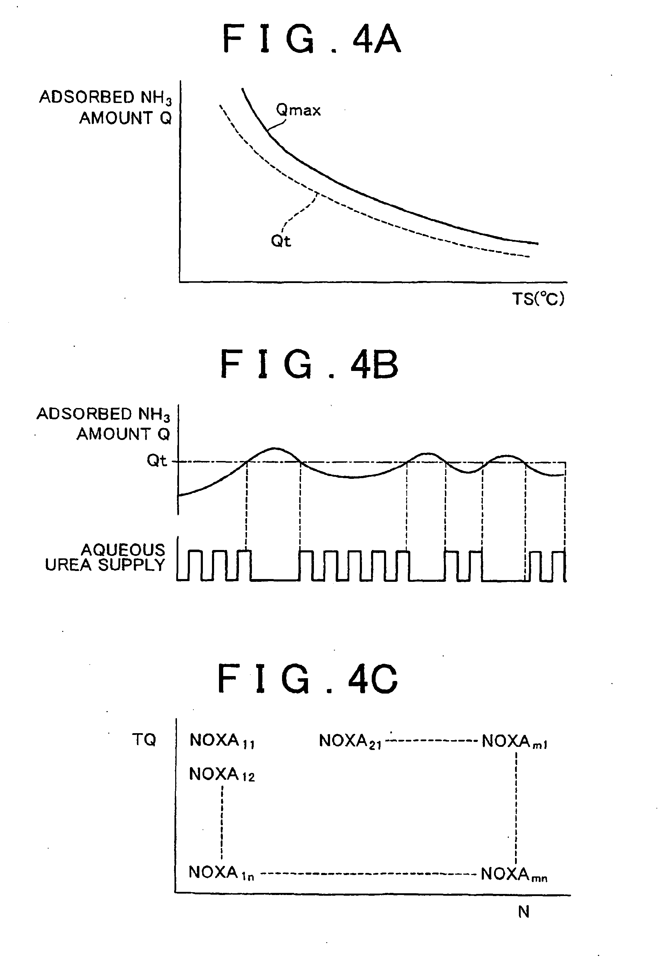

Next, the NOₓ selective reduction catalyst 16 will be described. The NOₓ selective reduction catalyst 16 adsorbs ammonia NH₃. In FIG. 4A, reference character Qmax indicates the maximum amount of ammonia able to be adsorbed on the NOₓ selective reduction catalyst 16 (hereinafter simply referred to as the "maximum adsorbable ammonia amount Qmax"). As is evident from the drawing, the maximum adsorbable ammonia amount Qmax decreases as the bed temperature TS of the NOₓ selective reduction catalyst 16 increases. The NOₓ in the exhaust gas is reduced by the ammonia NH₃ that is adsorbed on the NOₓ selective reduction catalyst 16 so it is necessary to make sure that a sufficient amount of ammonia NH₃ is always adsorbed on the NOₓ selective reduction catalyst 16.

Therefore in the first example embodiment of the invention, an adsorbed ammonia amount Qt that is only slightly less than the maximum adsorbable ammonia amount Qmax is set beforehand as a reference adsorbed ammonia amount, as shown in FIG 4A. The amount of aqueous urea that is supplied is controlled so that the adsorbed ammonia amount Q comes to match this reference adsorbed ammonia amount Qt. For example, when the adsorbed ammonia amount Q is less than the reference adsorbed ammonia amount Qt, aqueous urea is supplied intermittently, and when the adsorbed ammonia amount Q exceeds the reference adsorbed ammonia amount Qt, the supply of aqueous urea is stopped, as shown in FIG. 4B.

In the first example embodiment of the invention, the amount Q adsorbed on the NOₓ selective reduction catalyst 16 (i.e., the adsorbed ammonia amount Q) is calculated from the amount of aqueous urea supplied from the aqueous urea supply valve 17 and the amount of NOₓ discharged from the engine. That is, generally speaking, the amount of ammonia newly adsorbed on the NOₓ selective reduction catalyst 16 is proportional to the amount of aqueous urea supplied, and the amount of adsorbed ammonia that is consumed is proportional to the amount of NOₓ that is discharged. Therefore, the adsorbed ammonia amount Q is calculated from the amount of aqueous urea supplied and the amount of NOₓ discharged. Incidentally, the amount NOXA of NOₓ discharged per unit of time from the engine (hereinafter also simply referred to as the "discharged NOₓ amount NOXA") is stored in the ROM 32 in advance in the form of a map shown in FIG. 4C as a function of the required torque TQ and the engine speed N.

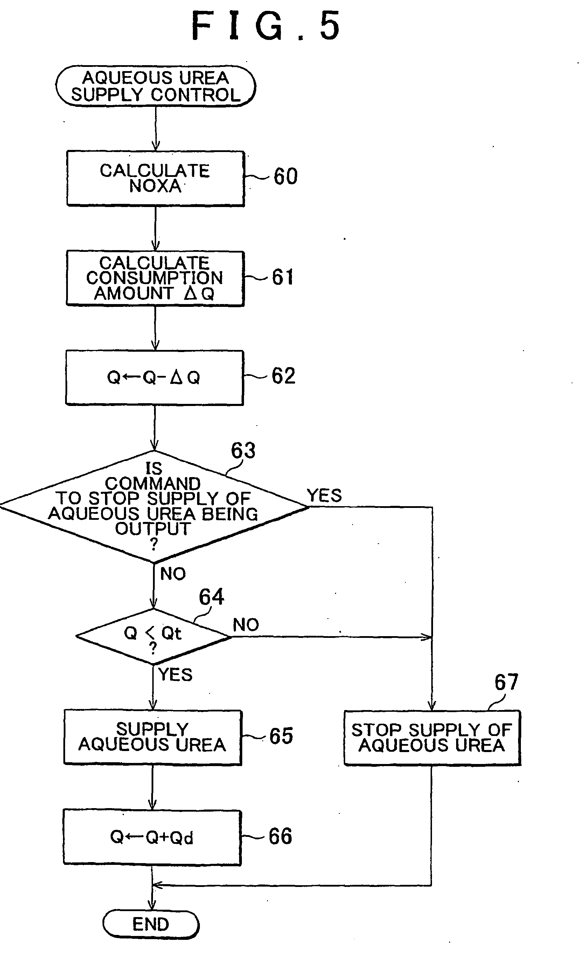

FIG. 5 is a flowchart of a routine to control the supply of aqueous urea, i.e., an aqueous urea supply control routine, which is an interrupt processing routine executed at fixed intervals of time. Referring to FIG. 5, first in step 60, the amount NOXA of NOₓ discharged per unit of time from the engine is calculated from the map shown in FIG. 4C. Next in step 61, of the ammonia NH₃ that is adsorbed on the NOₓ selective reduction catalyst 16, the amount ΔQ of ammonia NH₃ consumed per unit of time by the NOₓ (hereinafter also simply referred to as the "consumed ammonia amount ΔQ") is calculated based on the discharged NOₓ amount NOXA. Then in step 62, the consumed ammonia amount ΔQ is subtracted from the adsorbed ammonia amount Q.

Next in step 63, it is determined whether a command to stop the supply of aqueous urea is being output. Normally this command is not being output so the process proceeds on to step 64 where it is determined whether the adsorbed ammonia amount Q is less than the reference adsorbed ammonia amount Qt. If the adsorbed ammonia amount Q is less than the reference adsorbed ammonia amount Qt, i.e., Q < Qt, the process proceeds on to step 65 where aqueous urea continues to be intermittently supplied. Then in step 66, an ammonia amount Qd that is newly adsorbed is added to the adsorbed ammonia amount Q. If, on the other hand, it is determined in step 64 that the adsorbed ammonia amount Q is equal to or greater than the reference adsorbed ammonia amount Qt, i.e., Q ≥ Qt, the process proceeds on to step 67 where the supply of aqueous urea is stopped.

In this way, if a command to stop the supply of aqueous urea is not being output, the adsorbed ammonia amount Q is maintained at the reference adsorbed ammonia amount Qt. If, on the other hand, a command to stop the supply of aqueous urea is being output, the process proceeds on to step 67 where the supply of aqueous urea is stopped.

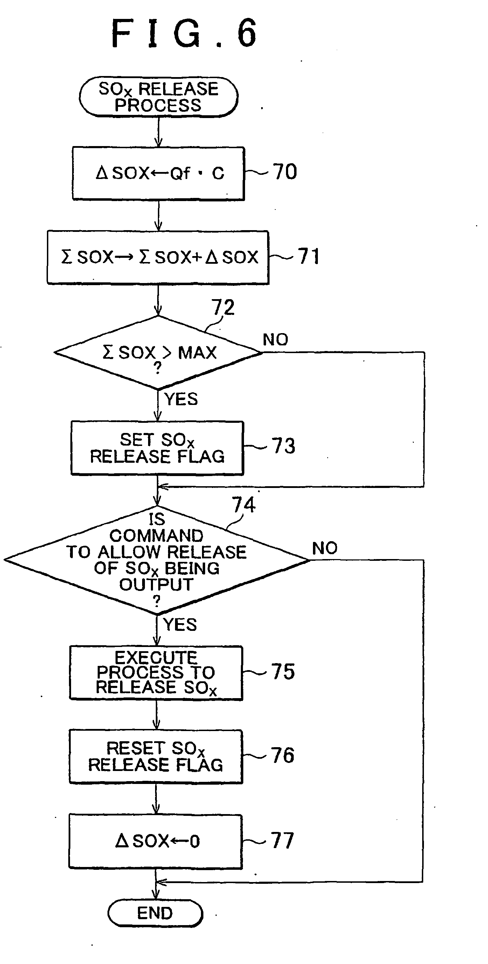

FIG. 6 is a flowchart of a routine to release SOₓ from the SOₓ trap catalyst 12. This routine is also an interrupt processing routine executed at fixed intervals of time. Referring to FIG 6, first in step 70, the amount ΔSOX of SOₓ trapped per unit of time in the SOₓ trap catalyst 16 (hereinafter also simply referred to as the "trapped SOₓ amount ΔSOX") is calculated. The fuel contains a fixed percentage of sulfur so in step 70 the trapped SOₓ amount ΔSOX per unit of time is calculated by multiplying the fuel injection quantity Qf per unit of time by a constant C. Then in step 71, an integrated value ΣSOX of the trapped SOₓ amount is calculated by adding ΣSOX to ΔSOX.

Next in step 72, it is determined whether the integrated value ΣSOX of the trapped SOₓ amount is more than an allowable value MAX at which the SOₓ trapping ability starts to decrease. If ΣSOX is equal to or less than MAX, i.e., ΣSOX ≤ MAX, then the process jumps ahead to step 74. If, on the other hand, ΣSOX is greater than MAX, i.e., ΣSOX > MAX, then the process proceeds on to step 73 where a SOₓ release flag indicating that SOₓ should be released from the SOₓ trap catalyst 12 is set, after which the process proceeds on to step 74.

In step 74, it is determined whether a command to allow SOₓ to be released from the SOₓ trap catalyst 12 is being output. If this command is not being output, this cycle of the routine ends. If, on the other hand, this command is being output, the process proceeds on to step 75 where a SOₓ release process is executed to release trapped SOₓ from the SOₓ trap catalyst 12 by raising the temperature of the SOₓ trap catalyst 12 to 600°C or more and making the air-fuel ratio of the exhaust gas that flows into the SOₓ trap catalyst 12 rich. Then in step 76, the SOₓ release flag is reset and in step 77, ΣSOX is cleared.

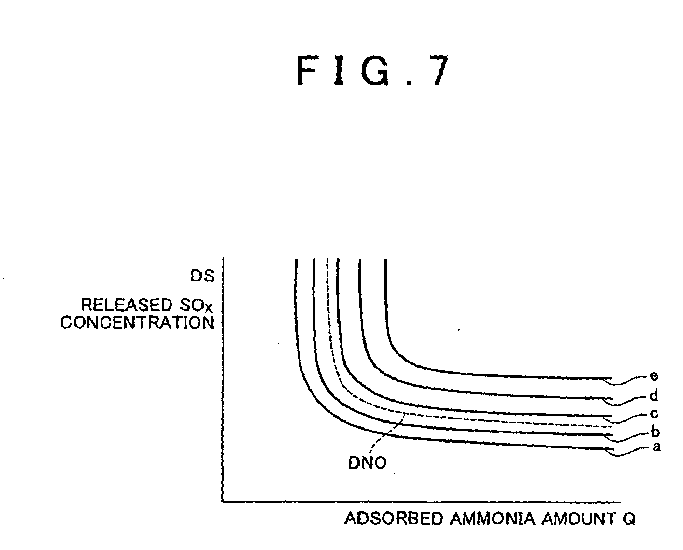

When SOₓ is released from the SOₓ trap catalyst 12, this SOₓ reacts with the ammonia NH₃ adsorbed on the NOₓ selective reduction catalyst 16, producing hydrogen sulfide H₂S as a result. Generally speaking, the concentration of the hydrogen sulfide H₂S produced at this time is proportional to the adsorbed ammonia amount Q, and proportional to the concentration of SOₓ in the exhaust gas flowing into the NOₓ selective reduction catalyst 16, i.e., the concentration DS of the SOₓ released from the SOₓ trap catalyst 12. FIG. 7 shows a graph with equal concentration curves a, b, c, d, and e of hydrogen sulfide H₂S in the exhaust gas that flows out from the NOₓ selective reduction catalyst 16 and is discharged into the atmosphere. The concentration DN of the hydrogen sulfide H₂S gradually increases from curve a toward curve e in FIG. 7.

When the concentration DN of the hydrogen sulfide H₂S discharged into the atmosphere becomes high, a very irritating odor is produced. Therefore it is necessary to keep the discharged concentration DN of hydrogen sulfide H₂S at an allowable concentration or lower where the irritating odor is almost unnoticeable. The allowable concentration where the irritating odor is almost unnoticeable is indicated by the broken line DNO in the drawing. Thus in this example embodiment of the invention, the discharge concentration DN of hydrogen sulfide H₂S is kept to the allowable concentration DNO or lower.

In this case, the discharge concentration DN of the hydrogen sulfide H₂S will decrease even if the adsorbed ammonia amount Q adsorbed on the NOₓ selective reduction catalyst 16 is simply reduced or the SOₓ release concentration DS from the SOₓ trap catalyst 12, i.e., the amount of SOₓ released from the SOₓ trap catalyst 12, is simply reduced. Accordingly, in this example embodiment of the invention, when releasing SOₓ from the SOₓ trap catalyst 12, the adsorbed ammonia amount Q adsorbed on the NOₓ selective reduction catalyst 16 is either reduced before SOₓ is released or, when SOₓ is released, the amount of SOₓ that is released from the SOₓ trap catalyst 12 is reduced so that the discharge concentration DN of hydrogen sulfide H₂S becomes less than the preset allowable concentration DNO when SOₓ is released from the SOₓ trap catalyst 12.

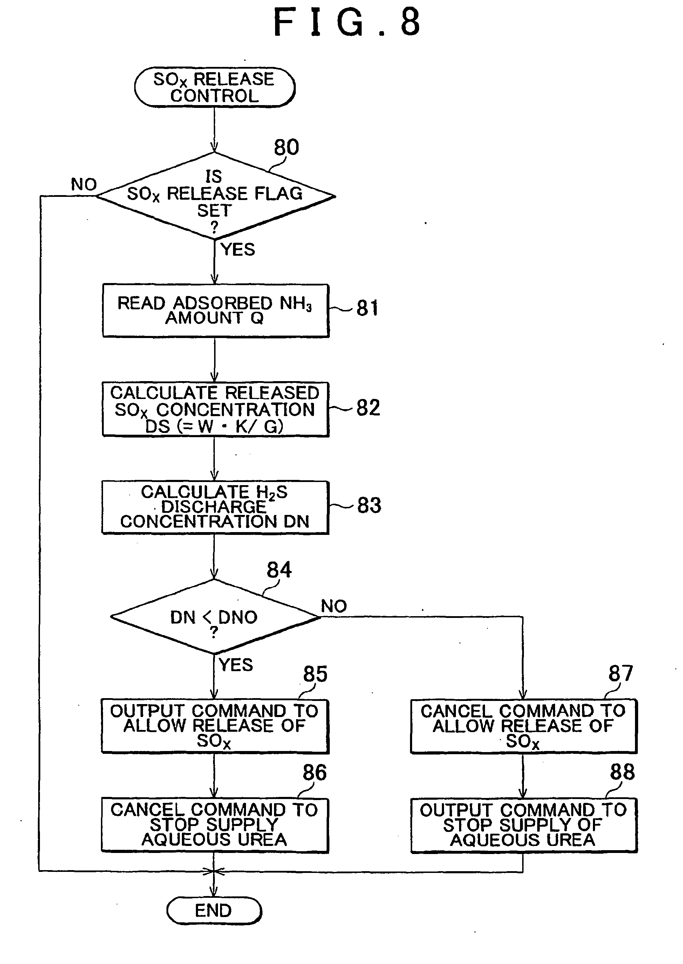

Next, various example embodiments will be described with reference to FIGS. 8 to 15. In a second example embodiment of the invention, an electronic control unit (ECU) 30 that functions as an estimating apparatus is provided which estimates whether the discharge concentration DN of hydrogen sulfide H₂S will become equal to or greater than the allowable concentration DNO when SOₓ is released from the SOₓ trap catalyst 12. If it is estimated that the discharge concentration DN of hydrogen sulfide H₂S will become equal to or greater than the allowable concentration DNO when SOₓ is released, the ECU 30 reduces the adsorbed ammonia amount Q adsorbed on the NOₓ selective reduction catalyst 16 before SOₓ is released so that the discharge concentration DN of hydrogen sulfide H₂S will be less than the allowable concentration DNO when SOₓ is released.

Incidentally, in this case, when aqueous urea stops being supplied, the ammonia NH₃ that is adsorbed is gradually consumed by the NOₓ in the exhaust gas so the adsorbed ammonia amount Q gradually decreases. Therefore, in this second example embodiment, the adsorbed ammonia amount Q is reduced by stopping the supply of aqueous urea. Incidentally, in this case, the adsorbed ammonia amount Q can still be reduced even if the amount of aqueous urea supplied is simply reduced. Therefore, the amount of aqueous urea supplied can also just be reduced instead of being stopped entirely.

When the discharge concentration DN of the hydrogen sulfide H₂S is less than the allowable concentration DNO, the irritating odor becomes almost unnoticeable. Therefore in the second example embodiment, SOₓ is released from the SOₓ trap catalyst when the discharge concentration DN of the hydrogen sulfide H₂S is less than the allowable concentration DNO.

FIG 8 is a flowchart of a SOₓ release control routine that is executed in addition to the routines in FIGS. 5 and 6 to carry out this second example embodiment. This routine is also an interrupt processing routine executed at fixed intervals of time. Referring to FIG. 8, first it is determined in step 80 whether the SOₓ release flag is set. If the SO, release flag is not set, this cycle of the routine ends. If, on the other hand, the SOₓ release flag is set, then the process proceeds on to step 81 where the adsorbed ammonia amount Q calculated in the routine shown in FIG. 5 is read.

Next in step 82, the concentration DS of released SOₓ (hereinafter also simply referred to as the "released SOₓ concentration DS") when SOₓ is released from the SOₓ trap catalyst 12 is estimated. That is, the amount of SOₓ released (g / sec) per unit of time when SOₓ is released from the SO_{X} trap catalyst 12 is expressed by the product W x K of the SOx release rate W (g / sec) shown in FIG. 3A multiplied by the SOₓ release rate K shown in FIG. 3B. Therefore, the concentration DS of SOₓ released from the SOₓ trap catalyst 12 can be estimated by dividing the amount of released SOₓ (i.e., W x K) by the volumetric flow rate G (1/ sec) of exhaust gas per unit of time (i.e., DS = (W x K) / G). Incidentally, the volumetric flow rate G of the exhaust gas is stored in the ROM 32 in advance as a function of the required torque TQ and the engine speed N.

Next in step 83, the discharge concentration DN of hydrogen sulfide H₂S is estimated from the relationship shown in FIG 7 based on the adsorbed ammonia amount Q read in step 81 and the released SOₓ concentration DS estimated in step 82. Then in step 84, it is estimated whether the discharge concentration DN of hydrogen sulfide H₂S is less than the allowable concentration DNO shown in FIG. 7. If the discharge concentration DN of hydrogen sulfide H₂S is equal to or greater than the allowable concentration DNO, i.e., DN ≥ DNO, then the process proceeds on to step 87.

In step 87 a command to allow the release of SOₓ is cancelled. That is, the command to allow the release of SOₓ is not output. Accordingly, as is shown in the routine for releasing SOₓ shown in FIG. 6, the SOₓ is not released at this time. Instead, the SOₓ release process is placed on standby. Next in step 88, a command to stop the supply of aqueous urea is output such that the supply of aqueous urea is stopped at this time, as is shown in the routine to control the supply of aqueous urea shown in FIG 5. When the SOₓ release process is placed on standby and the supply of aqueous urea is stopped in this way, the adsorbed ammonia amount Q gradually decreases. As a result, the estimated value of the discharge concentration DN of hydrogen sulfide H₂S also gradually decreases.

If, on the other hand, it is determined in step 84 that the discharge concentration DN of hydrogen sulfide H₂S is less than the allowable concentration DNO, i.e., DN < DNO, then the process proceeds on to step 85 where the command to allow the release of SOₓ is output. As a result, the process to release SOₓ is executed, as is shown in the routine in FIG. 6. At this time, the discharge concentration of hydrogen sulfide H₂S drops below the allowable concentration DNO. Then in step 86, the command to stop supply aqueous urea is cancelled, and the supply of aqueous urea is now restarted. The supply of aqueous urea is preferably restarted after the amount of released SOₓ has dropped somewhat after the command to allow the release of SOₓ is output.

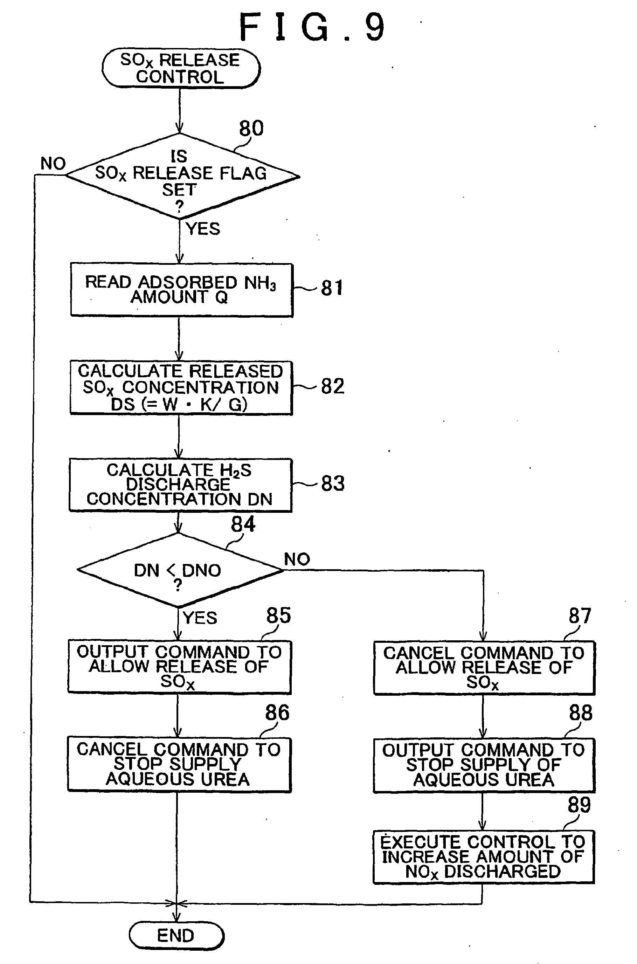

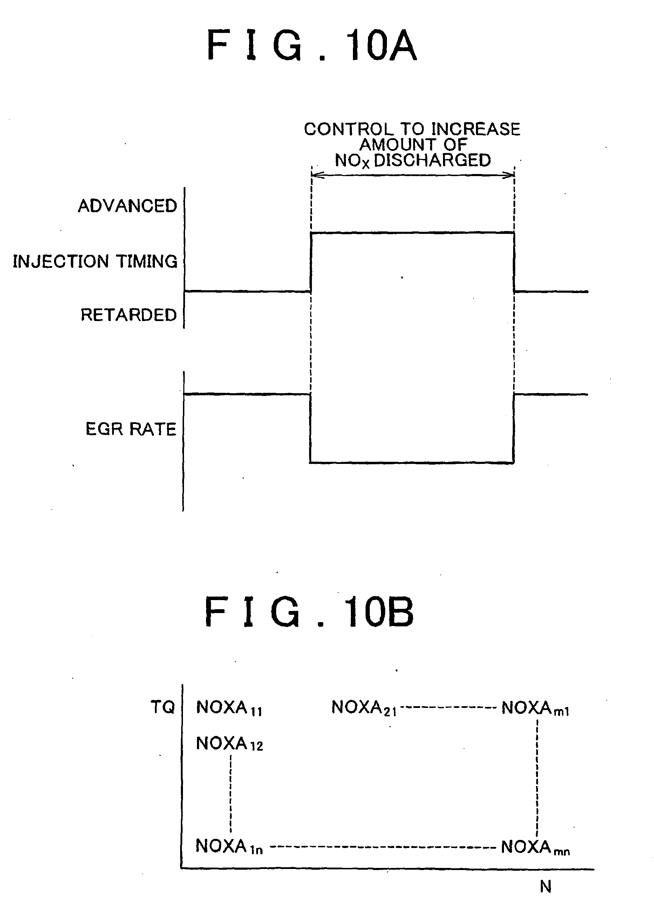

FIGS. 9 and 10 show a third example embodiment of the invention. Step 89 is the only step of the SOₓ release control routine shown in FIG. 9 for carrying out this third example embodiment that differs from the routine shown in FIG 8. All of the other steps, i.e., steps 80 to 88, are the same as they are in the routine shown in FIG. 8. Therefore, only step 89 in the SOₓ release control routine shown in FIG. 9 will be described. Descriptions of the other steps, i.e., steps 80 to 88, will be omitted.

In this third example embodiment, the amount of NOₓ discharged from the engine is increased in order to rapidly reduce the adsorbed ammonia amount Q when the process to release SOₓ from the SOₓ trap catalyst 12 is on standby. That is, in this third example embodiment, control to increase the amount of NOₓ that is discharged is performed in step 89 in FIG 9.

The control to increase the amount of NOₓ that is discharged is performed by, for example, advancing the fuel injection timing of fuel from the fuel injection valves 3 or reducing the EGR efficiency. Also in this third example embodiment, when the amount of discharged NOₓ is increased, the NOₓ amount NOXA that is discharged per unit of time from the engine is stored in the ROM 32 in advance in the form of a map shown in FIG 10B as a function of the required torque TQ and the engine speed N. When the control to increase the amount of NOₓ that is discharged is being performed; the NOₓ amount NOXA is calculated from the map shown in FIG. 10B in step 60 shown in FIG 5.

When the SOₓ release process has been on standby for an extended period of time after the SOₓ release flag has been set, the SOₓ trap catalyst 12 may become saturated with SOₓ, such that SOₓ may flow out of the SOₓ trap catalyst 12 when the air-fuel ratio is lean. In this case, if the amount of NOₓ discharged is increased as in the third example embodiment, the adsorbed ammonia amount will rapidly decrease so the amount of time that the SOₓ release process is on standby can be reduced. As a result, it is possible to prevent SOₓ from flowing out of the SOₓ trap catalyst 12 when the air-fuel ratio is lean.

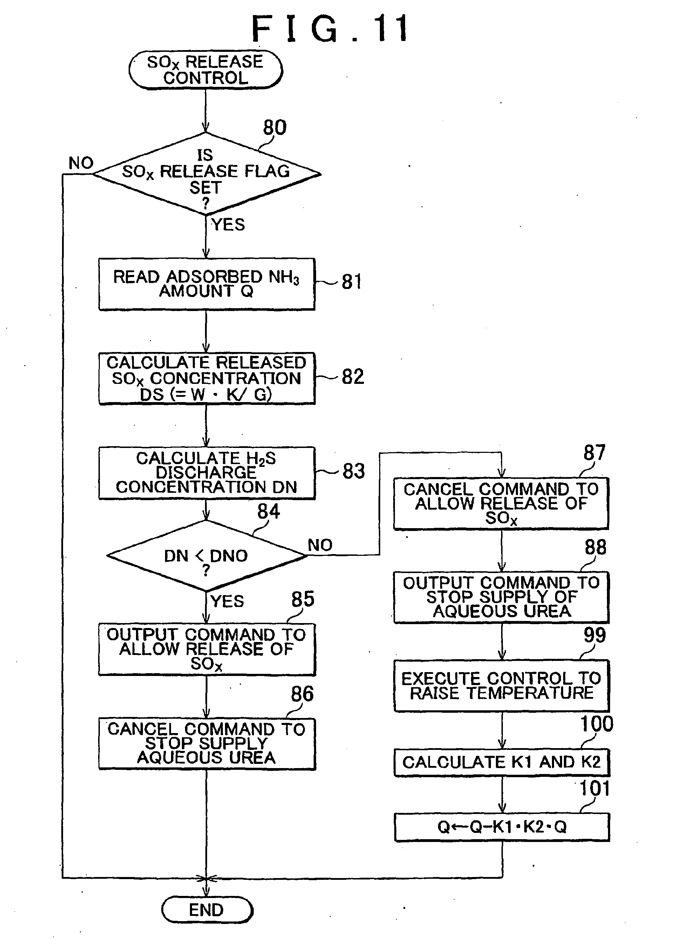

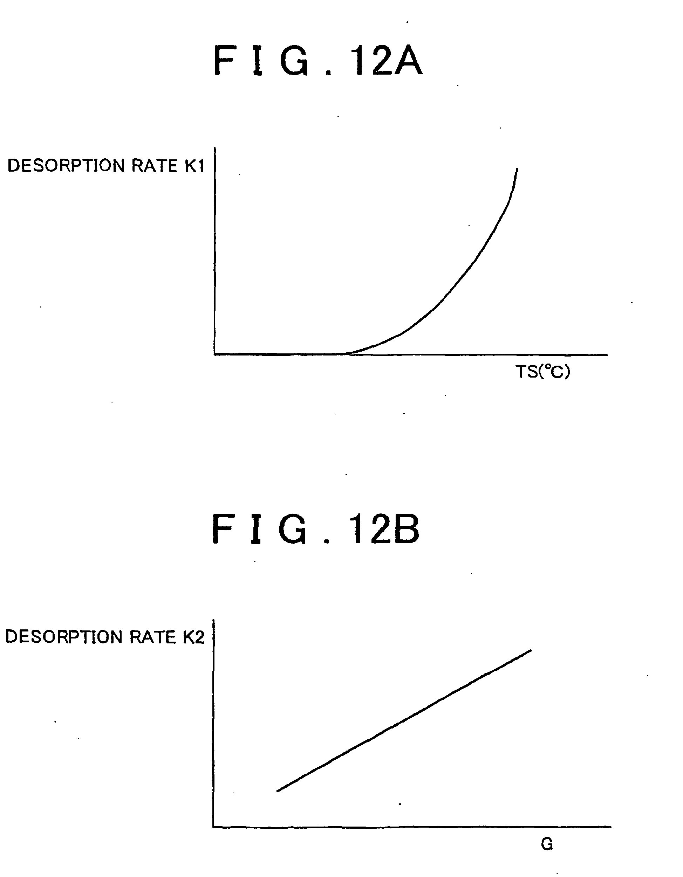

FIGS. 11 and 12 show a fourth example embodiment of the invention. Steps 99 to 101 are the only steps of the SOₓ release control routine shown in FIG. 11 for carrying out this fourth example embodiment that differ from the routine shown in FIG 8. All of the other steps, i.e., steps 80 to 88, are the same as they are in the routine shown in FIG. 8. Therefore, only steps 99 to 101 in the SOₓ release control routine shown in FIG 11 will be described. Descriptions of the other steps, i.e., steps 80 to 88, will be omitted.

In this fourth example embodiment, the temperature of the NOₓ selective reduction catalyst 16 is increased in order to rapidly reduce the adsorbed ammonia amount Q when the process to release SOₓ from the SOₓ trap catalyst 12 is on standby, That is, in this fourth example embodiment, control to raise the temperature of the NOₓ selective reduction catalyst 16 is performed in step 99 of FIG. 11. This control to raise the temperature of the NOₓ selective reduction catalyst 16 is performed by, for example, retarding the fuel injection timing which raises the temperature of the exhaust gas with a lean air-fuel ratio.

FIGS. 12A and 12B both show desorption rates K1 and K2 of adsorbed ammonia NH₃ from the NOₓ selective reduction catalyst 16. As shown in FIG 12A, the desorption rate K1 of the adsorbed ammonia NH₃ raises rapidly when the bed temperature TS of the NOₓ selective reduction catalyst 16 becomes high. Therefore, the adsorbed ammonia amount Q can be rapidly reduced by raising the temperature of the NOₓ selective reduction catalyst 16. Also, as shown in FIG. 12B, the desorption rate K2 increases as the volumetric flow rate G of the exhaust gas increases.

The desorption amount of the adsorbed ammonia can be obtained by multiplying the desorption rates K1 and K2 by the adsorbed ammonia amount Q. Therefore, in the fourth example embodiment, the desorption rates K1 and K2 are calculated from FIGS. 12A and 12B in step 100 when the control to raise the temperature of the NOₓ selective reduction catalyst 16 is performed in step 99 as shown in FIG. 11. Then the desorption amount (K1 × K2 × Q) is subtracted from the adsorbed ammonia amount Q in step 101. Accordingly, the adsorbed ammonia amount Q gradually decreases.

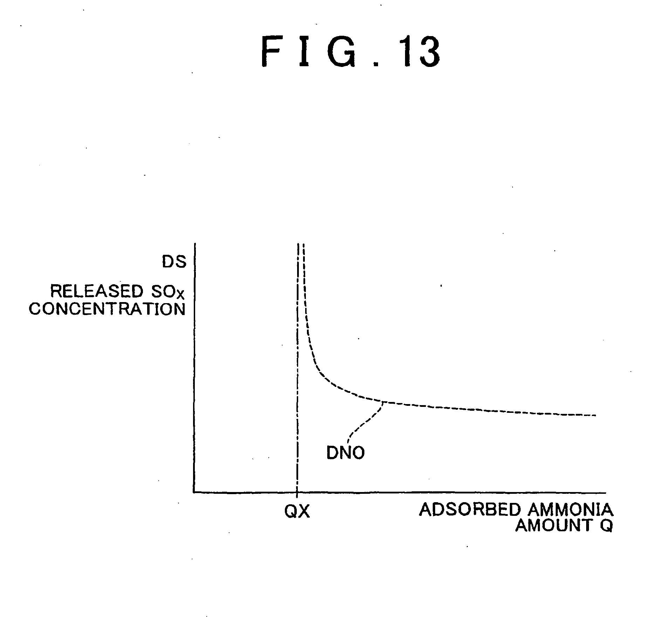

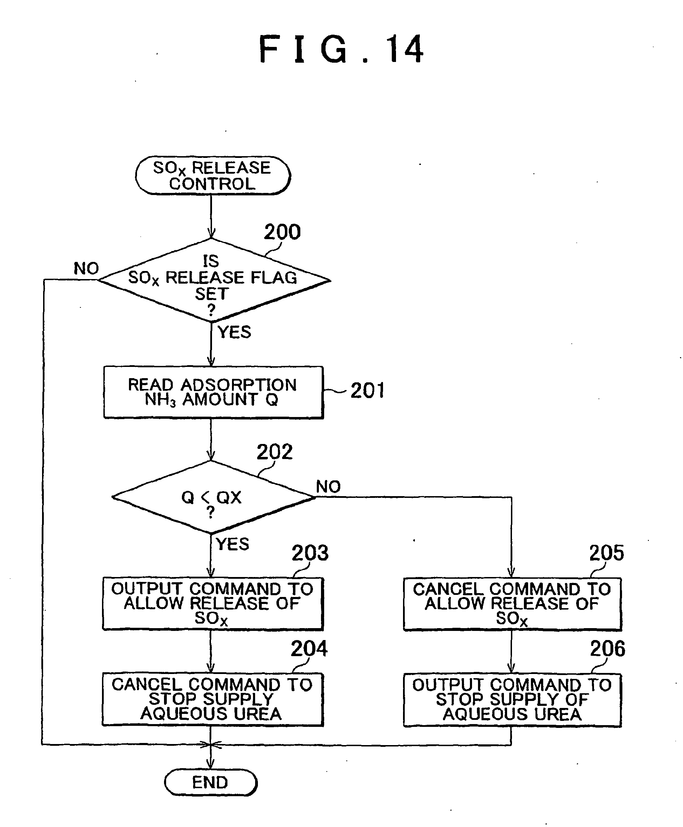

FIGS. 13 and 14 show a fifth example embodiment of the invention. In this fifth example embodiment, the discharge concentration DN of hydrogen sulfide H₂S is less than the allowable concentration DNO in order to release SOₓ from the SOₓ trap catalyst 12 using a simple method. The allowable adsorption amount QX with respect to only the adsorbed ammonia amount Q is set irrespective of the released SOₓ concentration DS, as shown in FIG. 13.

That is, in the fifth example embodiment, when SOₓ is to be released from the SOₓ trap catalyst 12, the supply of aqueous urea is stopped before SOₓ is released when it is determined by the ECU 30 that the adsorbed ammonia amount Q that is adsorbed on the NOₓ selective reduction catalyst 16 is equal to or greater than the allowable adsorption amount QX which is set beforehand. In this case as well, the amount of aqueous urea supplied may also be reduced instead of completely stopping the supply of aqueous urea.

FIG 14 is a flowchart illustrating a SOₓ release control routine that is executed in addition to the routines shown in FIGS. 5 and 6 in order to carry out the fifth example embodiment. This routine is also an interrupt processing routine executed at fixed intervals of time. Referring to FIG. 14, first in step 200, it is determined whether the SOₓ release flag is set. If the SOₓ release flag is not set, this cycle of the routine ends. If, however, the SOₓ release flag is set, the process proceeds on to step 201 where the adsorbed ammonia amount Q calculated in the routine shown in FIG. 5 is read.

Next in step 202, it is determined whether the adsorbed ammonia amount Q is less than the allowable adsorption amount QX. If the adsorbed ammonia amount Q is equal to or greater than the allowable adsorption amount QX, i.e., Q ≥ QX, then the process proceeds on to step 205 where a command to allow the release of SOₓ is canceled. That is, a command to allow SOₓ to be released is not output. Accordingly, the process to release SOₓ is not executed at this time, as is shown in the routine for releasing SOₓ in FIG. 6. Then in step 206, the command to stop the supply of aqueous urea is output so that the supply of aqueous urea is stopped at this time, as is shown in the routine to control the supply of aqueous urea shown in FIG. 5.

If, on the other hand, it is determined in step 202 that the adsorbed ammonia amount Q is less than the allowable adsorption amount QX, i.e., Q < QX, then the process proceeds on to step 203 where a command to allow the release of SOₓ is output. As a result, the process to release SOₓ is executed, as is shown in the routine in FIG. 6. Next in step 204, a command to atop supply of aqueous urea is cancelled so aqueous urea starts to be supplied again.

On the other hand, when the released SOₓ concentration DS when SOₓ is released from the SOₓ trap catalyst 12 is low, the discharge concentration DN of hydrogen sulfide H2S is less than the allowable concentration DNO or lower irrespective of the adsorbed ammonia amount Q, as shown in FIG 7. Therefore, in a sixth example embodiment of the invention, when SOₓ is released from the SOₓ trap catalyst 12, the amount of SOₓ that is released from the SOₓ trap catalyst 12 is reduced so that the discharge concentration DN of the hydrogen sulfide H₂S becomes less than the allowable concentration DNO.

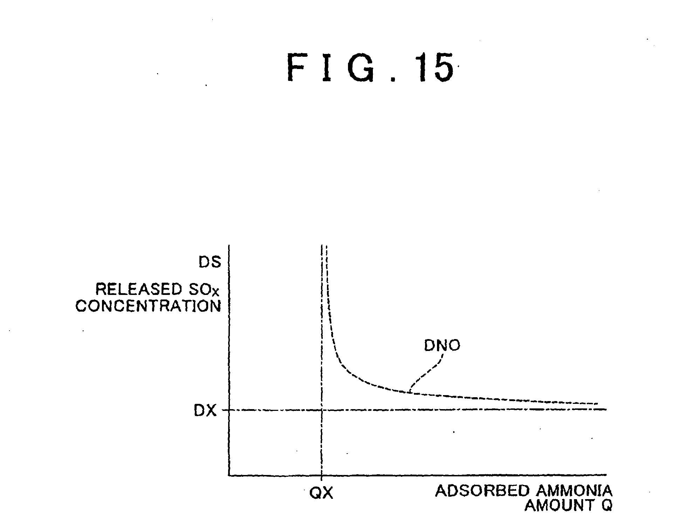

That is, in the sixth example embodiment, as shown in FIG 15, the allowable adsorption amount QX of the adsorbed ammonia amount Q at which the discharge concentration DN of hydrogen sulfide H₂S is less than the allowable concentration DNO is set beforehand irrespective of the released SOₓ concentration DS when SOₓ is released, and the allowable concentration DX of the released NOₓ concentration SOₓ at which the discharge concentration DN of hydrogen sulfide H₂S is less than allowable concentration DNO is set beforehand irrespective of the adsorbed ammonia amount Q when SOₓ is released. Then SOₓ release control is performed using the allowable absorption amount QX and the allowable concentration DX.

That is, in the region where Q is less than QX, i.e., Q < QX, in FIG. 15, DN is less than DNO, i.e., DN < DNO, regardless of the released SOₓ concentration DS. Therefore, in this sixth example embodiment, when Q is less than QX, the air-fuel ratio is made a target air-fuel ratio with a high degree of richness in order to release a large amount of SOₓ from the SO_{X} trap catalyst 12. On the other hand, in the region where Q is equal to or greater than QX, i.e., Q ≥ QX, the degree of richness of the air-fuel ratio is reduced so that the released SOₓ concentration DS becomes equal to the allowable concentration DX. The air-fuel ratio at this time is calculated as follows.

That is, as described above, the amount of SOₓ released (g / sec) per unit of time when SOₓ is released from the SOₓ trap catalyst 12 is expressed by the product K x W of the SOₓ release rate W (g / sec) shown in FIG. 3A multiplied by the SOₓ release rate K shown in FIG. 3B. Accordingly, the released SOₓ concentration DS (= W x K / G) from the SOₓ trap catalyst 12 can be calculated by dividing that SOₓ release amount W × K by the volumetric flow rate G (1 / sec) of the exhaust gas per unit of time. Therefore, to bring the released SOₓ concentration DS down to the allowable concentration DX, all that need be done is to make the SOₓ release rate K equal (DX × G / W), and the air-fuel ratio can be calculated using the relationship shown in FIG. 3B from this SOₓ release rate K.

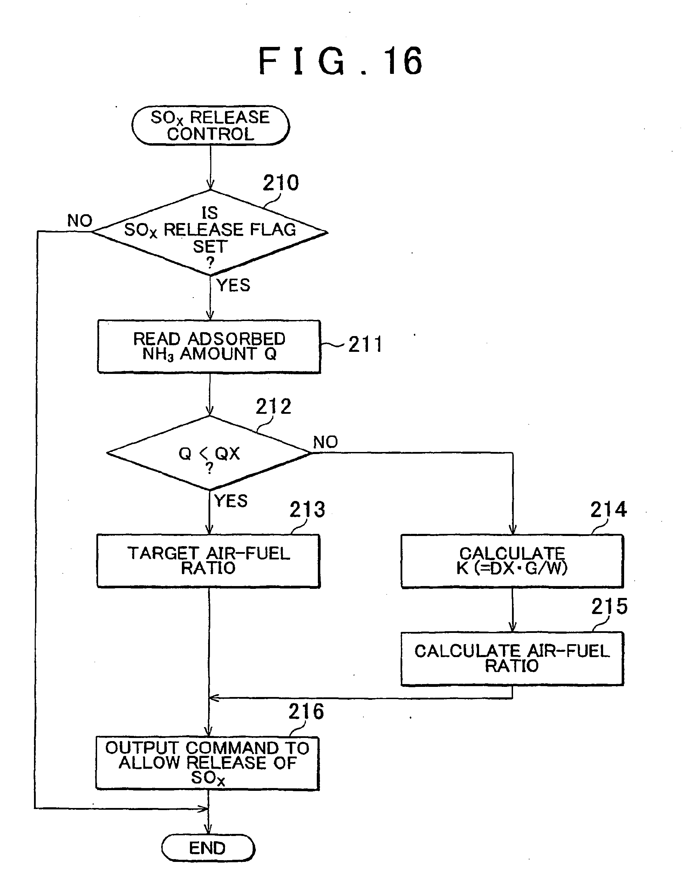

FIG. 16 is a flowchart illustrating a SOₓ release control routine that is executed in addition to the routines shown in FIGS. 5 and 6 for carrying out the sixth example embodiment. This routine is also an interrupt processing routine executed at fixed intervals of time. Referring to FIG 16, first in step 210 it is determined whether the SOₓ release flag is set. If the SOₓ release flag is not set, this cycle of the routine ends. If, on the other hand, the SOₓ release flag is set, the process proceeds on to step 211 where the adsorbed ammonia amount Q calculated in the routine in FIG 5 is read.

Next in step 212, it is determined whether the adsorbed ammonia amount Q is lower than the allowable adsorption amount QX. If the adsorbed ammonia amount Q is lower than the allowable adsorption amount QX, i.e., Q < QX, the process proceeds on to step 213 where the air-fuel ratio when the SOₓ is released is made the target air-fuel ratio with a high degree of richness, after which the process proceeds on to step 216. If, on the other hand, the adsorbed ammonia amount Q is equal to or greater than the allowable adsorption amount QX, i.e., Q ≥ QX, the process proceeds on to step 214 where the SOₓ release rate K (= KD x G / W) is calculated. Then in step 215 the air-fuel ratio when the SOₓ is released is calculated based on the relationship shown in FIG. 3B from this SOₓ release rate K, after which the process proceeds on to step 216.

In step 216, a command allowing the release of SOₓ is output. As a result, the process to release SOₓ is executed, as is shown in the routine in FIG. 6. Incidentally, in this sixth example embodiment, the command to stop the supply of aqueous urea is not output.

## Claims

1. An exhaust gas control apparatus for an internal combustion engine, **characterized by** comprising:
a NOₓ selective reduction catalyst (16) which is arranged in an engine exhaust passage and selectively reduces NOₓ in exhaust gas using ammonia when an air-fuel ratio of the exhaust gas is lean;
a SOₓ trap catalyst (12) which is arranged in the engine exhaust passage upstream of the NOₓ selective reduction catalyst (16) and traps SOₓ in the exhaust gas; and
a control apparatus (30) that controls the state of the exhaust gas,
wherein the control apparatus (30) i) reduces an adsorbed ammonia amount adsorbed on the NOₓ selective reduction catalyst (16) before SOₓ is released or ii) reduces the amount of SOₓ released from the SOₓ trap catalyst (12) when SOₓ is released, such that a discharge concentration of hydrogen sulfide is less than a preset maximum concentration (DNO) when SOₓ is released.

2. The exhaust gas control apparatus according to claim 1, further comprising:
an estimating apparatus (30) that estimates whether the discharge concentration of hydrogen sulfide will be equal to or greater than the maximum concentration (DNO) when SOₓ is released from the SOₓ trap catalyst (12),
wherein when it is estimated that the discharge concentration of hydrogen sulfide will be equal to or greater than the maximum concentration (DNO) when SOₓ is released, the control apparatus (30) i) reduces the adsorbed ammonia amount adsorbed on the NOₓ selective reduction catalyst (16) before SOₓ is released or ii) reduces the amount of SOₓ released from the SOₓ trap catalyst (12) when SOₓ is released, such that the discharge concentration of hydrogen sulfide is less than the maximum concentration (DNO) when SOₓ is released.

3. The exhaust gas control apparatus according to claim 1, wherein when releasing SOₓ from the SOₓ trap catalyst (12), the control apparatus (30) reduces the adsorbed ammonia amount adsorbed on the NOₓ selective reduction catalyst (16) before SOₓ is released until the adsorbed ammonia amount is less than a preset maximum adsorption amount (QX).

4. The exhaust gas control apparatus according to claim 3, further comprising:
a determining apparatus (30) that determines whether the adsorbed ammonia amount adsorbed on the NOₓ selective reduction catalyst (16) is equal to or greater than the maximum adsorption amount (QX) when SOₓ is released from the SOₓ trap catalyst (12),
wherein when it is determined that the adsorbed ammonia amount adsorbed on the NOₓ selective reduction catalyst (16) is equal to or greater than the maximum adsorption amount (QX), the control apparatus (30) reduces the adsorbed ammonia amount until the adsorbed ammonia amount adsorbed on the NOₓ selective reduction catalyst (16) is less than the maximum adsorption amount (QX) before releasing SOₓ.

5. The exhaust gas control apparatus according to any one of claims 1 to 4, wherein when releasing SOₓ from the SOₓ trap catalyst (12), the control apparatus (30) sets an air-fuel ratio to a first target air-fuel ratio when the adsorbed ammonia amount adsorbed on the NOₓ selective reduction catalyst (16) is less than a preset maximum adsorption amount (QX); and the control apparatus (30) sets the air-fuel ratio to a second target air-fuel ratio which is greater than the first target air-fuel ratio when the adsorbed ammonia amount adsorbed on the NOₓ selective reduction catalyst (16) is equal to or greater than the maximum adsorption amount (QX) and a concentration of released SOₓ is larger than a threshold value (DX).

6. The exhaust gas control apparatus according to claim 5, wherein if the adsorbed ammonia amount adsorbed on the NOₓ selective reduction catalyst (16) is less than the maximum adsorption amount (QX), the discharge concentration of hydrogen sulfide is less than the maximum concentration (DNO) regardless of the concentration of released SOₓ; and if the concentration of released SOₓ is equal to or less than the threshold value (DX), the discharge concentration of hydrogen sulfide is less than the maximum concentration (DNO) regardless of the adsorbed ammonia amount.

7. The exhaust gas control apparatus according to any one of claims 1 to 6, wherein when SOₓ is to be released from the SOₓ trap catalyst (12), the control apparatus (30) makes the air-fuel ratio of the exhaust gas flowing into the SOₓ trap catalyst (12) rich.

8. The exhaust gas control apparatus according to claim 1, further comprising:
an aqueous urea supply valve (17) arranged in the engine exhaust passage upstream of the NOₓ selective reduction catalyst,
wherein when it is estimated that the discharge concentration of hydrogen sulfide will be equal to or greater than the maximum concentration (DNO) when SOₓ is released from the SOₓ trap catalyst (12), the control apparatus (30) i) reduces the amount of aqueous urea supplied before releasing SOₓ or ii) stops the supply of aqueous urea before releasing SOₓ before releasing SOₓ, such that the discharge concentration of hydrogen sulfide is less than the maximum concentration (DNO) when SOₓ is released.

9. The exhaust gas control apparatus according to claim 8, wherein when reducing the amount of aqueous urea supplied or stopping the supply of aqueous urea, the control apparatus increases the amount of NOₓ discharged from the engine.

10. The exhaust gas control apparatus according to claim 8, wherein when reducing the amount of aqueous urea supplied or stopping the supply of aqueous urea, the control apparatus raises the temperature of the NOₓ selective reduction catalyst.

11. The exhaust gas control apparatus according to claim 8, wherein when it is determined that the adsorbed ammonia amount adsorbed on the NOₓ selective reduction catalyst is equal to or greater than the maximum adsorption amount when SOₓ is released from the SOₓ trap catalyst, the control apparatus reduces the amount of supplied aqueous urea before releasing SOₓ or stops the supply of aqueous urea before releasing SOₓ.

## Patentansprüche

1. Abgassteuerungsvorrichtung für einen Verbrennungsmotor, **dadurch gekennzeichnet, dass** die Vorrichtung aufweist:
einen selektiven NOx-Reduktionskatalysator (16), der in einer Motorabgasleitung angeordnet ist und NOx in dem Abgas unter Verwendung von Ammoniak selektiv reduziert, wenn ein Kraftstoff-Luftverhältnis des Abgases mager ist;
einen SOx-Aufnahmekatalysator (12), der in der Motorabgasleitung stromauf des selektiven NOx-Reduktionskatalysators (16) angeordnet ist und SOx in dem Abgas aufnimmt; und
eine Steuerungsvorrichtung (30), die den Zustand des Abgases steuert,
wobei die Steuerungsvorrichtung (30) i) eine adsorbierte Ammoniakmenge, die am selektiven NOx-Reduktionskatalysator (16) adsorbiert wird, reduziert, bevor SOx freigesetzt wird, oder ii) die Menge an SOx, die aus dem SOx-Aufnahmekatalysator (12) freigesetzt wird, reduziert, wenn SOx freigesetzt wird, so dass eine Abführkonzentration eines Schwefelwasserstoffs kleiner ist als eine voreingestellte maximale Konzentration (DNO), wenn SOx freigesetzt wird.

2. Abgassteuerungsvorrichtung nach Anspruch 1, ferner aufweisend:
eine Schätzungsvorrichtung (30), die schätzt, ob die Abführkonzentration des Schwefelwasserstoffs größer oder gleich der maximalen Konzentration (DNO) ist, wenn SOx aus dem SOx-Aufnahmekatalysator (12) freigesetzt wird,
wobei, wenn geschätzt wird, dass die Abführkonzentration des Schwefelwasserstoffs größer oder gleich der maximalen Konzentration (DNO) ist, wenn SOx freigesetzt wird, die Steuerungsvorrichtung (30) i) die adsorbierte Ammoniakmenge, die am selektiven NOx-Reduktionskatalysator (16) adsorbiert wurde, reduziert, bevor SOx freigesetzt wird, oder ii) die Menge an SOx, die aus dem SOx-Aufnahmekatalysator (12) freigesetzt wurde, reduziert, wenn SOx freigesetzt wird, so dass die Abführkonzentration des Schwefelwasserstoffs kleiner als die maximale Konzentration (DNO) ist, wenn SOx freigesetzt wird.

3. Abgassteuerungsvorrichtung nach Anspruch 1, wobei, wenn SOx aus dem SOx-Aufnahmekatalysator (12) freigesetzt wird, die Steuerungsvorrichtung (30) die adsorbierte Ammoniakmenge, die am selektiven NOx-Reduktionskatalysator (16) adsorbiert wurde, reduziert, bevor SOx freigesetzt wird, bis die adsorbierte Ammoniakmenge geringer ist als eine voreingestellte maximale Adsorptionsmenge (QX).

4. Abgassteuerungsvorrichtung nach Anspruch 3, ferner aufweisend:
eine Bestimmungsvorrichtung (30), die bestimmt, ob die adsorbierte Ammoniakmenge, die am selektiven NOx-Reduktionskatalysator (16) adsorbiert wurde, größer oder gleich der maximalen Adsorptionsmenge (QX) ist, wenn SOx aus dem SOx-Aufnahmekatalysator (12) freigesetzt wird,
wobei, wenn bestimmt wird, dass die adsorbierte Ammoniakmenge, die am selektiven NOx-Reduktionskatalysator (16) adsorbiert wurde, größer oder gleich der maximalen Adsorptionsmenge (QX) ist, die Steuerungsvorrichtung (30) die adsorbierte Ammoniakmenge reduziert, bis die adsorbierte Ammoniakmenge, die am selektiven NOx-Reduktionskatalysator (16) adsorbiert wurde, kleiner als die maximale Adsorptionsmenge (QX) ist, bevor SOx freigesetzt wird.

5. Abgassteuerungsvorrichtung nach einem der Ansprüche 1 bis 4, wobei, wenn SOx aus dem SOx-Aufnahmekatalysator (12) freigesetzt wird, die Steuerungsvorrichtung (30) ein Kraftstoff-Luftverhältnis auf ein erstes Soll-Kraftstoff-Luftverhältnis einstellt, wenn die adsorbierte Ammoniakmenge, die am selektiven NOx-Reduktionskatalysator (16) adsorbiert wurde, kleiner als eine voreingestellte maximale Adsorptionsmenge (QX) ist; und die Steuerungsvorrichtung (30) das Kraftstoff-Luftverhältnis auf ein zweites Soll-Kraftstoff-Luftverhältnis einstellt, das größer als das erste Soll-Kraftstoff Luftverhältnis ist, wenn die adsorbierte Ammoniakmenge, die am selektiven NOx-Reduktionskatalysator (16) adsorbiert wurde, größer oder gleich einer maximalen Adsorptionsmenge (QX) ist und eine Konzentration des freigesetzten SOx größer als ein Schwellwert (DX) ist.

6. Abgassteuerungsvorrichtung nach Anspruch 5, wobei, wenn die adsorbierte Ammoniakmenge, die am selektiven NOx-Reduktionskatalysator (16) adsorbiert wurde, kleiner als die maximale Adsorptionsmenge (QX) ist, die Abführkonzentration des Schwefelwasserstoffs kleiner als die maximale Konzentration (DNO) ist ungeachtet der Konzentration des freigesetzten SOx; und wenn die Konzentration des freigesetzten SOx kleiner oder gleich dem Schwellwert (DX) ist, die Abführkonzentration des Schwefelwasserstoffs kleiner als die maximale Konzentration (DNO) ist ungeachtet der adsorbierten Ammoniakmenge.

7. Abgassteuerungsvorrichtung nach einem der Ansprüche 1 bis 6, wobei, wenn SOx aus dem SOx-Aufnahmekatalysator (12) freigesetzt werden soll, die Steuerungsvorrichtung (30) das Kraftstoff-Luftverhältnis des in den SOx-Aufnahmekatalysator (12) strömenden Abgases anfettet.

8. Abgassteuerungsvorrichtung nach Anspruch 1, ferner aufweisend:
ein Zufuhrventil (17) für ein wässriges Carbamid, das in der Motorabgasleitung stromauf des selektiven NOx-Reduktionskatalysators angeordnet ist,
wobei, wenn geschätzt wird, dass die Abführkonzentration des Schwefelwasserstoffs größer oder gleich der maximalen Konzentration (DNO) ist, wenn SOx aus dem SOx-Aufnahmekatalysator (12) freigesetzt wird, die Steuerungsvorrichtung (30) i) die Menge des zugeführten wässrigen Carbamids reduziert, bevor SOx freigesetzt wird, oder ii) die Zufuhr des wässrigen Carbamids stoppt, bevor SOx freigesetzt wird, so dass die Abführkonzentration des Schwefelwasserstoffs kleiner ist als die maximale Konzentration (DNO), wenn SOx freigesetzt wird.

9. Abgassteuerungsvorrichtung nach Anspruch 8, wobei, wenn die Menge des zugeführten wässrigen Carbamids reduziert wird, oder die Zufuhr des wässrigen Carbamids gestoppt wird, die Steuerungsvorrichtung die Menge des aus dem Motor abgeführten NOx erhöht.

10. Abgassteuerungsvorrichtung nach Anspruch 8, wobei, wenn die Menge des zugeführten wässrigen Carbamids reduziert wird, oder die Zufuhr des wässrigen Carbamids gestoppt wird, die Steuerungsvorrichtung die Temperatur des selektiven NOx-Reduktionskatalysators erhöht.

11. Abgassteuerungsvorrichtung nach Anspruch 8, wobei, wenn bestimmt wird, dass die adsorbierte Ammoniakmenge, die am selektiven NOx-Reduktionskatalysator adsorbiert wurde, größer oder gleich der maximalen Adsorptionsmenge ist, wenn SOx aus dem SOx-Aufnahmekatalysator (12) freigesetzt wird, die Steuerungsvorrichtung die Menge des zugeführten wässrigen Carbamids reduziert, bevor SOx freigesetzt wird, oder die Zufuhr des wässrigen Carbamids stoppt, bevor SOx freigesetzt wird.

## Revendications

1. Appareil de commande de gaz d'échappement pour un moteur à combustion interne, **caractérisé par** le fait de comprendre:
un catalyseur (16) de réduction sélective des NOₓ qui est agencé dans un passage d'échappement du moteur et qui réduit de manière sélective les NOₓ dans les gaz d'échappement en utilisant de l'ammoniac lorsqu'un rapport air-carburant des gaz d'échappement est pauvre;
un catalyseur (12) piégeant les SOₓ qui est agencé dans le passage d'échappement du moteur en amont du catalyseur (16) de réduction sélective des NOₓ et qui piège les SOₓ dans les gaz d'échappement; et
un appareil de commande (30) qui commande l'état des gaz d'échappement,
où l'appareil de commande (30) i) réduit une quantité d'ammoniac adsorbée qui est adsorbée sur le catalyseur (16) de réduction sélective des NOₓ avant la libération des SOₓ ou ii) réduit la quantité des SOₓ libérés du catalyseur (12) piégeant les SOₓ lorsque les SOₓ sont libérés, de sorte qu'une concentration de décharge de sulfure d'hydrogène soit inférieure à une concentration maximale (DNO) préétablie lorsque les SOₓ sont libérés.

2. Appareil de commande de gaz d'échappement selon la revendication 1, comprenant en plus:
un appareil (30) d'estimation qui estime si la concentration de décharge du sulfure d'hydrogène est supérieure ou égale à la concentration maximale (DNO) lorsque les SOₓ sont libérés du catalyseur (12) piégeant les SOₓ,
où, lorsqu'on estime que la concentration de décharge du sulfure d'hydrogène est supérieure ou égale à la concentration maximale (DNO) lorsque les SOₓ sont libérés, l'appareil de commande (30) i) réduit la quantité d'ammoniac adsorbée qui est adsorbée sur le catalyseur (16) de réduction sélective des NOₓ avant la libération des SOₓ ou ii) réduit la quantité des SOₓ libérés du catalyseur (12) piégeant les SOₓ lorsque les SOₓ sont libérés, de sorte que la concentration de décharge du sulfure d'hydrogène soit inférieure à la concentration maximale (DNO) lorsque les SOₓ sont libérés.

3. Appareil de commande de gaz d'échappement selon la revendication 1, dans lequel lorsqu'on libère des SOₓ du catalyseur (12) piégeant les SOₓ, l'appareil de commande (30) réduit la quantité d'ammoniac adsorbée qui est adsorbée sur le catalyseur (16) de réduction sélective des NOₓ avant la libération des SOₓ jusqu'à ce que la quantité d'ammoniac adsorbée soit inférieure à une quantité (QX) d'adsorption maximale préétablie.

4. Appareil de commande de gaz d'échappement selon la revendication 3, comprenant en plus:
un appareil (30) de détermination qui détermine si la quantité d'ammoniac adsorbée qui est adsorbée sur le catalyseur (16) de réduction sélective des NOₓ est supérieure ou égale à la quantité (QX) d'adsorption maximale lorsque les SOₓ sont libérés du catalyseur (12) piégeant les SOₓ,
où lorsqu'on détermine que la quantité d'ammoniac adsorbée qui est adsorbée sur le catalyseur (16) de réduction sélective des NOₓ est supérieure ou égale à la quantité (QX) d'adsorption maximale, l'appareil de commande (30) réduit la quantité d'ammoniac adsorbée jusqu'à ce que la quantité d'ammoniac adsorbée qui est adsorbée sur le catalyseur (16) de réduction sélective des NOₓ soit inférieure à la quantité (QX) d'adsorption maximale avant la libération des SOₓ.

5. Appareil de commande de gaz d'échappement selon l'une quelconque des revendications 1 à 4, dans lequel, lorsqu'on libère les SOₓ du catalyseur (12) piégeant les SOₓ, l'appareil de commande (30) établit un rapport air-carburant à un premier rapport air-carburant cible lorsque la quantité d'ammoniac adsorbée qui est adsorbée sur le catalyseur (16) de réduction sélective des NOₓ est inférieure à une quantité (QX) d'adsorption maximale préétablie; et l'appareil de commande (30) établit le rapport air-carburant à un deuxième rapport air-carburant cible qui est supérieur au premier rapport air-carburant cible lorsque la quantité d'ammoniac adsorbée qui est adsorbée sur le catalyseur (16) de réduction sélective des NOₓ est supérieure ou égale à la quantité (QX) d'adsorption maximale et une concentration des SOₓ libérés est supérieure à une valeur seuil (DX).

6. Appareil de commande de gaz d'échappement selon la revendication 5, dans lequel, si la quantité d'ammoniac adsorbée qui est adsorbée sur le catalyseur (16) de réduction sélective des NOₓ est inférieure à la quantité (QX) d'adsorption maximale, la concentration de décharge de sulfure d'hydrogène est inférieure à la concentration maximale (DNO) indépendamment de la concentration des SOₓ libérés; et si la concentration des SOₓ libérés est inférieure ou égale à la valeur seuil (DX), la concentration de décharge du sulfure d'hydrogène est inférieure à la concentration maximale (DNO) indépendamment de la quantité d'ammoniac adsorbée.

7. Appareil de commande de gaz d'échappement selon l'une quelconque des revendications 1 à 6, dans lequel lorsque des SOₓ doivent être libérés du catalyseur (12) piégeant les SOₓ, l'appareil de commande (30) rend le rapport air-carburant des gaz d'échappement s'écoulant dans le catalyseur (12) piégeant les SOₓ riche.

8. Appareil de commande de gaz d'échappement selon la revendication 1, comprenant en plus:
une soupape (17) d'alimentation en urée aqueuse agencée dans le passage d'échappement du moteur en amont du catalyseur de réduction sélective des NOₓ,
où, lorsqu'on estime que la concentration de décharge de sulfure d'hydrogène est supérieure ou égale à la concentration maximale (DNO) lorsque les SOₓ sont libérés du catalyseur (12) piégeant les SOₓ, l'appareil de commande (30) i) réduit la quantité d'urée aqueuse alimentée avant la libération des SOₓ ou ii) arrête l'alimentation de l'urée aqueuse avant la libération des SOₓ de sorte que la concentration de décharge du sulfure d'hydrogène soit inférieure à la concentration maximale (DNO) lorsque les SOₓ sont libérés.

9. Appareil de commande de gaz d'échappement selon la revendication 8, dans lequel, lorsqu'on réduit la quantité d'urée aqueuse alimentée ou lorsqu'on arrête l'alimentation de l'urée aqueuse, l'appareil de commande augmente la quantité des NOₓ déchargée du moteur.

10. Appareil de commande de gaz d'échappement selon la revendication 8, dans lequel lorsqu'on réduit la quantité d'urée aqueuse alimentée ou lorsqu'on arrête l'alimentation de l'urée aqueuse, l'appareil de commande augmente la température du catalyseur de réduction sélective des NOₓ.

11. Appareil de commande de gaz d'échappement selon la revendication 8, dans lequel, lorsqu'on détermine que la quantité d'ammoniac adsorbée qui est adsorbée sur le catalyseur de réduction sélective des NOₓ est supérieure ou égale à la quantité d'adsorption maximale lorsque les SOₓ sont libérés du catalyseur piégeant les SOₓ, l'appareil de commande réduit la quantité d'urée aqueuse alimentée avant la libération des SOₓ ou arrête l'alimentation de l'urée aqueuse avant la libération des SOₓ
